# FASCICULE DE BREVET EUROPEEN

(11) **EP 2 060 037 B1**
(45) Date de publication et mention de la délivrance du brevet: **12.05.2010**
(21) Numéro de dépôt: 07820151.4
(22) Date de dépôt: 12.09.2007
(51) Int. Cl.: H04H 20/24, H04H 20/26, H04H 20/93, H04H 60/07

(54) **METHODE DE TRANSMISSION D'INFORMATIONS DE SERVICES DANS DIFFERENTS TYPES DE RESEAUX DE DIFFUSION ET UNITE DE TRAITEMENT DESDITES INFORMATIONS**
VERFAHREN ZUM SENDEN VON DIENSTINFORMATIONEN IN VERSCHIEDENEN ARTEN VON AUSSTRAHLUNGSNETZEN UND EINHEIT ZUM VERARBEITEN DER INFORMATIONEN
METHOD OF TRANSMITTING SERVICE INFORMATION IN VARIOUS TYPES OF BROADCASTING NETWORKS AND UNIT FOR PROCESSING SAID INFORMATION

(30) Priorité: 13.09.2006 EP 06291450
(43) Date de publication de la demande: 20.05.2009
(73) Titulaire: Nagravision S.A., 1033 Cheseaux-sur-Lausanne (CH)
(72) Inventeur: BURCKARD, Antoine, F-78180 Montigny le Bretonneux (FR)
(74) Mandataire: Leman Consulting S.A.
(86) Numéro de dépôt international: PCT/EP2007/059580
(87) Numéro de publication internationale: WO 2008/031843

(56) Documents cités:
- EP-A- 1 359 750
- EP-A- 1 411 723
- WO-A-2006/061760
- FR-A- 2 864 869
- US-A1- 2003 078 687
- US-B1- 6 920 327

## Description

### Domaine de l'invention

La présente invention concerne le domaine de la diffusion, dans un réseau, de flux de données numériques comprenant des services et des données d'informations, à destination d'une pluralité de récepteurs. Plus particulièrement, elle concerne la transmission et la réception de données d'information sur des services fournis par divers type de réseaux de diffusion. Ces informations renseignent un utilisateur sur l'accès et sur les caractéristiques des services disponibles à partir de récepteurs équipés d'interfaces appropriés.

### Arrière plan de l'invention

La norme DVB (Digital Video Broadcasting) définit un service comme un ensemble de données numériques géré par un opérateur et diffusé dans un flux de transport par voie hertzienne terrestre ou via satellite ou par un câble à destination d'une pluralité de récepteurs / décodeurs. Ces données correspondent généralement à des programmes de télévision, de radio, des informations spécifiques (promotions commerciales, bourse, météo, spectacles, etc.) ou à toute autre application multimédia exploitable en ligne ou après téléchargement sur un support adéquat.

Le flux de transport contient les données d'un service consistant par exemple en un contenu audio/vidéo accompagné de données additionnelles comme des sous-titres, du télétexte ou des applications interactives et des informations sur le service comme le descriptif du contenu, l'horaire de diffusion, les conditions d'accès etc.

Le document EP1464176 décrit une méthode permettant l'utilisation des données fournies par la table d'information sur les événements (DVB-SI Event Information Table) pour accéder à un flux diffusé en mode IP. Un événement proposé est associé à au moins deux sources et le système permet un accès transparent à cet événement quelle que soit sa source. Un récepteur adéquat comprend des moyens d'information sur les services permettant l'utilisation des données d'information d'événements pour accéder aux contenus diffusés selon le protocole IP. Ces moyens d'information utilisent des protocoles d'annonce et de description de services pour relier les canaux de services mis à disposition par le fournisseur de contenus numérique et les services de diffusion des flux IP.

Le document FR2864869 divulgue un système de diffusion de services DVB via un réseau IP dans lequel les informations de signalisation décrivant le réseau et les services offerts sont séparées des services eux-mêmes. Un récepteur connecté à un réseau bidirectionnel détecte des services en se connectant d'abord à un premier flux pour en extraire des informations de localisation sur le réseau. Elles comprennent d'une part des données sur les flux transportant le contenu de ces services et d'autre part des données sur les flux séparés transportant des informations sur ces services. Lors d'une étape finale, le récepteur utilise ces informations pour établir une liste de services disponibles sur le réseau.

Le document US2003/0078687 décrit une méthode et un système de configuration automatique d'un environnement d'audition pour une reproduction sonore optimale basé sur les caractéristiques du signal audio transmis et du service en cours de réception. Ces caractéristiques comme par exemple la diffusion du signal en mode mono ou stéréo, sont transmises via des tables normalisées d'informations sur les événements EIT (Event Information Table) utilisées dans l'établissement du guide électronique de programme EPG (Electronic Program Guide). A la réception de ces informations, le récepteur se configure, si le matériel et le système le permettent, selon le meilleur mode, en l'occurrence en mode stéréo et ceci sans l'intervention de l'utilisateur. Selon une variante, la base de données du guide de programme et celle de la liste des canaux sont combinées et stockées dans une mémoire externe au récepteur par exemple dans un serveur local du système (head end). Un guide de programme partiel accompagnant le signal audio peut être ainsi transmis au récepteur qui en extraira les informations nécessaires à une configuration assurant un fonctionnement optimal.

Le document EP1207698 décrit un récepteur de programmes audio/vidéo numériques comprenant une première et une seconde unité de réception recevant chacune des programmes respectivement à partir d'un premier et d'un second réseau de diffusion, Ces deux réseaux sont distincts, comme par exemple un réseau hertzien de diffusion par satellite ou de diffuson terrestre et un réseau de diffusion par Internet. Un programme reçu par au moins l'une des deux unités de réception est accompagné, à des périodes prédéterminées, d'instructions de commutation afin de déterminer la réception d'un programme par l'une ou l'autre des deux unités du récepteur. L'utilisateur stocke dans le récepteur des informations telles que par exemple une liste de programmes favoris. A la réception d'une instruction de commutation le récepteur connecté au réseau de diffusion satellite commute sur Internet lorsqu'il détecte par exemple l'adresse URL (Uniform Resource Locator) de l'un des programmes favoris de la liste. Cette détection est effectuée grâce à des données de sélection Internet (URL par exemple) extraites de la table des programmes PMT (Program Map Table) dont l'identifiant de paquet PID (Packet Identifier) se trouve dans la table NIT (Network Information Table) transmise avec le contenu audio vidéo des programmes.

Le document EP1411723 décrit une méthode d'obtention d'informations sur les programmes diffusés dans un flux de transport. Ces informations sont obtenues à partir de liens Internet ou URL complets ou partiels contenus dans les informations de services SI (Service Information) ou dans les information spécifique de programme PSI (Program Specific Information) comprenant les tables de programmes PMT (Program Map Table) ou d'informations sur les événements EIT (Event Information Table). Le récepteur reconstitue, si nécessaire, le chemin ou l'URL complet à partir de données d'identification d'attribution du récepteur stockées dans celui-ci pour télécharger, depuis le serveur de contenus ainsi défini, les informations relatives à un ou des programmes diffusés dans le flux.

Le document US-B1-6920327 décrit une méthode de transmission de données utilisant des systèmes de transmission radio entre des stations émettrices/réceptrices. Un ordinateur gère dynamiquement des systèmes de transmission de données pour communiquer a partir d'au moins une station émettrice/réceptrice. Cette gestion est basée sur un profil d'abonné, la position d'une station émettrice/réceptrice, et/ou la vitesse de transmission. Un dispositif de commutation calcule quel système de transmission radio est le plus approprié et commute automatiquement d'un système de transmission radio à un autre lorsque la qualité de la transmission courante se dégrade.

Dans les systèmes de ces documents, le récepteur se charge de l'exploration des services disponibles sur le réseau et extrait des différentes tables les informations nécessaires pour établir une liste de programmes. Cette liste est stockée dans le récepteur et mise à disposition d'un guide électronique de programmes EPG (Electronic Program Guide) s'affichant sur un écran et fonctionnant comme interface entre l'utilisateur et le récepteur.

Dans certaines configurations, le récepteur ou décodeur aussi appelé set-top-box est connecté d'une part à un câble ou une antenne et d'autre part à un réseau IP bidirectionnel pour recevoir des flux de services DVB. Ces deux réseaux de diffusion, comprenant chacun leurs propres paramètres, entraînent un traitement spécifique des informations de services de la part du récepteur. Ce traitement local peut constituer une surcharge du récepteur surtout lorsque le nombre, la diversité des services proposés ainsi que la complexité de leur paramètres deviennent importants.

### Description sommaire de l'invention

Le but de la présente invention est d'une part simplifier le traitement des données d'information de services par le récepteur et d'autre part assurer une retransmission transparente de ces informations sur un réseau DVB sans exploration préalable des services disponibles sur le réseau IP par le récepteur.

Ce but est atteint par une méthode de transmission d'informations de services cf. revendication 1 et une unité de traitement de flux de données numériques de services cf. revendication 8.

Une unité de traitement correspond ici à tout récepteur configuré pour la réception et le traitement de flux de données numériques diffusées tel qu'un décodeur (set top box) ou un ordinateur personnel.

La méthode de l'invention permet de grouper dans une table transmise par le réseau DVB toutes les informations sur les services disponibles quelle que soit leur source. Le récepteur peut ainsi afficher ces informations par le seul traitement du flux diffusé par le réseau DVB sans devoir traiter les informations des services diffusés sur le réseau IP. L'analyse des différents flux IP et le traitement des données d'information de services par le centre de gestion décharge ainsi le récepteur de tâches souvent considérables.

En effet, l'introduction des informations de services IP extraites du réseau IP dans des tables de niveau inférieur comme les tables PMT (Program Map Table) ou d'informations sur les événements EIT (Event Information Table), implique une analyse de tous les services et programmes diffusés du flux DVB afin d'insérer ces informations dans les tables correctes. A la réception, une analyse similaire devient nécessaire pour retrouver les informations de services IP.

Parmi toutes les tables incluses dans les données d'information de services, on utilise de préférence la table NIT ou table d'information réseau NIT (Network Information Table) qui est située au niveau le plus élevé dans la hiérarchie des tables d'information de service avec la table SDT (Service Description Table) et la table BAT (Bouquet Association Table). L'utilisation de ces tables de niveau supérieur réduit de manière importante les tâches d'analyse et de traitement exécutées d'une part du côté serveur lors de l'insertion des informations de services IP et d'autre part du côté du récepteur lors de la détermination du service IP correspondant au service DVB en cours de réception.

En cas de problèmes de réception sur le réseau DVB, les informations affichées renseignent l'utilisateur sur la disponibilité de services équivalents sur le réseau IP. Le cas échéant, le récepteur peut être commuté sur le réseau IP automatiquement selon une programmation de l'interface utilisateur ou manuellement.

Les données d'information de services sont généralement extraites d'une structure appelée SD&S (Service Discovery & Sélection) transmise par le réseau IP. Elles contiennent essentiellement les adresses IP et les descripteurs des services. Selon une configuration, elles peuvent également inclure les références des diffuseurs IP.

La table NIT regroupe l'ensemble des données de services rendu accessible à un utilisateur par un opérateur. Dans un exemple de transmission par voie hertzienne, cette table contient des informations nécessaires aux réglages du récepteur pour capter un flux DVB telles que la fréquence, la polarisation, des paramètres de correction d'erreurs, les débits des flux de données etc.

Selon une variante, la table NIT peut être complétée avec les informations des réseaux IP reçues par d'autres voies que la structure SD&S, notamment par des fichiers, des bases de données ou encore par une saisie manuelle.

### Brève description des figures

L'invention sera mieux comprise grâce à la description détaillée qui va suivre et qui se réfère aux figures annexées données à titre d'exemple nullement limitatif.

La figure 1 illustre un ensemble de récepteurs connectés à un réseau IP et à un réseau de diffusion dans lesquels la distribution des flux numériques est organisée par des centres de gestion.

La figure 2 représente un schéma bloc d'une unité de traitement comprenant deux modules récepteurs commutables connectés respectivement à un réseau de services diffusés DVB et IP.

### Description détaillée de l'invention.

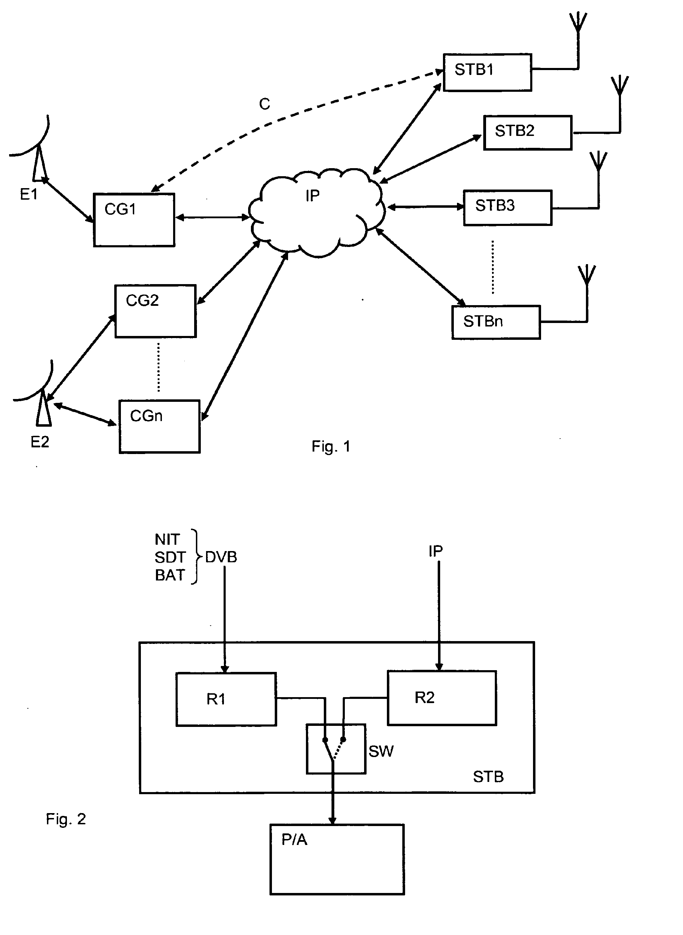

Le schéma bloc de la figure 1 montre une pluralité de récepteurs ou set top box (STB1...STBn) recevant des données numériques à partir d'un réseau de diffusion DVB et connectés à un réseau IP. Les centres de gestion (CG1,..., CGn) dépendant des opérateurs sont chargés de l'organisation des flux et de leur diffusion sur les réseaux. Dans l'exemple, les flux sont transmis aux récepteurs par voie hertzienne par des émetteurs (E1, E2) ou par câble (C) sous le contrôle des centres de gestion (CG1...CGn). La méthode de l'invention est par conséquent mise en oeuvre au niveau des centres de gestion (CG1,...CGn) qui fournissent les services ainsi que les informations les concernant qui sont régies par des normes définies par l'ETSI (European Telecomunication Standard Institute).

Le document EN 300 468 intitulé Digital Video Broadcasting (DVB); Specification for Service Information (SI) in DVB Systems publié par l'ETSI décrit la structure des informations de services SI et la norme ISO/IEC 13818-1 MPEG-2 "Information technology - Generic coding of moving pictures and associated audio information: Systems" définit les information spécifiques de programmes PSI (Program Specific Information).

Les données PSI permettent de configurer le récepteur de manière automatique pour démultiplexer et décoder les différents flux de programmes qu'il reçoit.

Ces données PSI sont structurées en quatre types de tables qui sont transmises par sections, à savoir.
1) La table d'association de programmes (PAT) Program Association Table:
   Elle indique pour chaque service du multiplex la localisation c'est-à-dire les valeurs des identificateurs de paquets PID (Packet Identifier) des paquets du flux de transport de la table d'organisation des programmes PMT (Program Map Table) correspondante. Elle fournit également la localisation de la table d'information réseau NIT (Network Information Table).
2) La table d'accès conditionnel CAT (Conditional Access Table)
   Elle fournit des informations propres aux systèmes d'accès conditionnel utilisés dans le multiplex comprenant la localisation du flux de messages d'administration EMM (Entitlement Management Message).
3) La table d'organisation des programmes PMT (Program Map Table)
   Elle identifie et indique les localisations des flux constituant chaque service et la localisation des champs de référence d'horloge de programme pour un service.
4) La table d'information réseau NIT (Network Information Table)
   Sa localisation est définie selon la norme ISO/IEC 13818-1 MPEG-2, le format des données n'étant pas compris dans cette norme. Elle fournit des informations sur le réseau physique comme la désignation des émetteurs (hertziens ou satellitaires) permettant de retrouver d'autres flux de transport sur le réseau. La table NIT, de niveau hiérarchique supérieur par rapport aux autres tables d'information de services tel que les tables EIT et PMT, décrit l'organisation des flux, elle permet notamment au récepteur de se configurer automatiquement.

Les informations spécifiques de programmes PSI sont complétées par des données permettant à l'utilisateur d'identifier les services et les événements transportés dans un multiplex ou dans un réseau. Ces données sont réparties dans des tables telles que:
- La table d'association de bouquets BAT (Bouquet Association Table) fournissant outre le nom du bouquet (ensemble de programmes ou de services mis à disposition d'utilisateurs par un opérateur), la liste des services disponibles dans chaque bouquet. Cette table est facultative.
- La table de description de service SDT (Service Description Table) contenant des données décrivant les services comme les noms et les fournisseurs des services.

Les deux niveaux supérieurs obligatoires NIT (Network Information Table) et SDT (Service Description Table) sont nécessaires pour régler un récepteur sur un programme choisi.

Les informations sur les contenus des programmes figurent dans les tables d'information sur les événements EIT (Event Information Table) qui se réfèrent à chaque service à partir de son identification selon la norme DVB. Ces informations décrivent les différentes émissions en proposant des informations semblables à celles que l'on trouve dans un magazine traditionnel de programmes TV. Elles indiquent notamment le titre, l'heure de début, la durée et le genre de l'émission.

Pour chaque émission ou service, d'autres informations écrites peuvent compléter des données sur le contenu. Par exemple, les informations sur toutes les émissions programmées le jour même et les 7 jours suivants seront transmises afin d'être affichées dans le guide électronique des programmes agissant en tant qu'interface utilisateur pour une sélection facilitée des programmes. Les principales informations contenues dans la table EIT sont le nom de l'événement, l'heure de début, la durée de l'émission, son état d'avancement, son titre, une description textuelle sommaire du contenu, la définition du format de l'image et du son (16:9, 4:3, mono, stéréo, etc.), l'heure exacte de début permettant de commencer un enregistrement au début effectif d'un programme, même en cas de retard de diffusion du programme en question comme avec le système VPS (Video Programminig System).

Selon une variante, les tables BAT ou SDT peuvent aussi être complétées par des informations de services supplémentaires se rapportant à la diffusion sur les réseaux IP au même titre que la table NIT. Cette opération est effectuée, lorsque la table NIT ne peut pas être modifiée à cause de restrictions imposées par les distributeurs de services.

Le document ETSI TS 102 034 intitulé Digital Video Broadcasting (DVB); Transport of MPEG-2 Based DVB Services over IP Based Networks spécifie le déploiement de services multimédia MPEG-2 DVB sur des réseaux IP bidirectionnels. Ces réseaux IP permettent la diffusion de flux de données importants grâce à l'avènement de la technologie DSL (Digital Subscriber Line) qui leur procure une grande largeur de bande et un débit de données élevé.

Les tables d'information réseau NIT (Network Information Table) se sont pas utilisées dans les réseaux IP, les informations nécessaires sont transmises dans une structure SD&S (Service Discovery & Selection). Cette structure fournit les informations sur les services offerts et sur la manière d'accéder à ces services à l'aide d'adresses IP. Elle s'apparente à celle des informations de services SI des réseaux DVB traditionnels dont certaines informations peuvent être transférées vers la structure SD&S appropriée.

Les informations SD&S peuvent être délivrées selon un modèle "push" multipoint supportant la diffusion de contenu en direct ou "pull" point à point pour la diffusion de contenus à la demande (VOD). Deux types de structures sont définis pour la diffusion en direct:
1) "TS Full SI" (Transport Stream full Service Information). Ce mode permet la retransmission transparente de flux de transport provenant d'autre réseaux de distribution (satellite, câble...) comprenant toutes les tables SI sans modifications. Comme la table NIT est remplacée par les structures SD&S dans les réseaux DVB-IP, elle est ignorée par le récepteur et le fournisseur de services DVB-IP doit générer des informations de découverte de services additionnelles.
2) "TS Optional SI" (Transport Stream Optional Service Information). Dans ce mode, la retransmission de tables SI est optionnelle et il est supposé que le fournisseur de services DVB-IP dispose d'autres mécanismes pour transmettre les informations de services appropriées. Lorsque les tables SI sont présentes, les informations SD&S sont prioritaires.

En résumé, la plupart des informations SI des réseaux DVB sont retransmises soit de manière transparente, soit transférées dans des structures SD&S avant la transmission dans des réseaux IP.

Pour la diffusion via les réseaux DVB, la table NIT ou d'autres tables groupant des données SI peuvent être modifiées par l'ajout des informations réseaux IP issues d'autres sources comme des fichiers ou de bases de données sans devoir les extraire des structures SD&S.

Une table NIT contient des informations sur l'organisation physique des flux multiplexés transportés par un réseau donné et sur le réseau lui-même. La combinaison d'un identificateur de réseau avec un identificateur du flux de transport permet d'identifier de manière unique chaque flux transmis. Les réseaux sont désignés par des identificateurs ou codes les définissant de manière unique selon le document ETSI ETR 162 "Allocation of Service Information (SI) codes for Digital Video Broadcasting (DVB) systems". Le récepteur stocke les informations de la table NIT dans une mémoire non-volatile afin de raccourcir le temps d'accès lors de la commutation d'un canal vers un autre (zapping). Une table NIT peut être transmise à d'autres réseaux que le réseau courant et elle se différencie par un identificateur de table.

Les normes ETSI définissent l'organisation des flux de données transmis avec les informations nécessaires à la réception des services transportés par ces flux en fonction de la configuration des récepteurs. Elles laissent cependant quelques libertés quant au contenu des tables, notamment les descripteurs de services qui peuvent être adaptés aux caractéristiques des réseaux auxquels sont connectés les récepteurs. Ainsi, le fait de compléter selon la méthode de l'invention une table NIT ou d'autres tables appartenant aux informations de services SI n'est pas contre-indiqué par les normes pourvu que les informations introduites respectent le format et la syntaxe prescrits.

Du fait que les informations de services DVB-SI sont transmises par sections identifiées par les identificateurs de paquets PID, la table NIT peut être divisée en plusieurs sous-tables, par exemple une par diffuseur de services IP. Le récepteur se charge alors de reconstituer une table complète lors du stockage dans la mémoire non-volatile.

Le schéma bloc de la figure 2 illustre une unité de traitement (STB) comprenant un premier module récepteur (R1) configuré pour la réception des services du flux DVB et second un module récepteur (R2) configuré pour la réception des services du flux IP. L'unité (STB) comprend également des moyens de commutation (SW) servant à activer la réception des services IP avec le second module récepteur (R2) lorsque la réception des services DVB avec le premier module (R1) devient mauvaise ou plus possible. Les moyens de traitement et d'affichage (P/A) connectés à l'unité de traitement (STB) permettent de présenter à l'utilisateur les informations sur les services DVB et/ou IP diffusés sur un téléviseur ou tout autre écran de visualisation.

La table NIT, SDT ou BAT reçue par le premier module récepteur (R1), c'est-à-dire via le réseau du type DVB, contient les informations sur les services diffusés par le réseau IP. Cette table est complétée par le centre de gestion, selon la méthode décrite plus haut, avec les adresses IP accompagnant les descripteurs des services et accessoirement les références des diffuseurs IP.

En cas de mauvaise réception par le premier module récepteur (R1) d'un service à partir du réseau du type DVB, l'unité de traitement (STB) active, soit automatiquement, soit manuellement par l'utilisateur selon les informations affichées, la réception par le second module récepteur (R2), c'est-à-dire via le réseau IP, afin de recevoir un ou des services équivalents au service défectueux.

## Revendications

1. Méthode de transmission d'informations de services dans un réseau de diffusion par au moins un centre de gestion (CG1...CGn) à destination d'une pluralité d'unités de traitement (STB1, STBn) connectées d'une part à un réseau de diffusion de flux de données numériques du type DVB et d'autre part à un réseau de diffusion de flux de données numériques du type IP, les dits flux comprenant des données de contenu des services et des données additionnelles d'information sur les dits services structurées dans des tables adaptées au protocole de transmission propre à chaque type de réseau, ladite méthode est **caractérisée en ce qu'**elle comprend les étapes suivantes:
- explorer les flux diffusés par le réseau du type DVB et les flux diffusés par le réseau du type IP et extraire les informations de services des dits flux,
- compléter une table d'information située au niveau le plus élevé dans la hiérarchie des tables d'information de services par des informations de services contenant un descripteur comprenant un identificateur d'un service du réseau du type IP et une adresse IP correspondant audit service, ladite table étant comprise dans les informations de services DVB-SI transmises par le réseau DVB,
- transmettre la table d'information complétée dans les flux diffusés par le réseau DVB à destination des unités de traitement, ladite table d'information complétée contribuant à réduire les tâches d'analyse et de traitement exécutées par les unités de traitement lors de la détermination du service du réseau du type IP correspondant à un service du réseau du type DVB en cours de réception.

2. Méthode selon la revendication 1, **caractérisée en ce que** la table d'information complétée consiste en la table d'information réseau NIT définie selon la norme ETSI EN 300 468.

3. Méthode selon la revendication 1, **caractérisée en ce que** la table d'information complétée consiste en la table d'association de bouquets BAT ou de description de service SDT définie selon la norme ETSI EN 300 468.

4. Méthode selon la revendication 1, **caractérisée en ce que** la table d'information est complétée par une référence du diffuseur du service IP.

5. Méthode selon la revendication 1, **caractérisée en ce que** la table d'information complétée est transmise sous forme divisée en plusieurs sous-tables attribuées chacune à un diffuseur de service IP.

6. Méthode selon la revendication 1, **caractérisée en ce que** la table d'information est complétée par les informations de services extraites de la structure SD&S (Service Discovery & Selection) transmise par le réseau IP.

7. Méthode selon la revendication 1, **caractérisée en ce que** les informations de services se rapportant au réseau IP sont introduites dans la table d'information à partir de fichiers ou de bases de données.

8. Unité de traitement (STB) de flux de données numériques de services comprenant un premier module récepteur (R1) de flux de données numériques du type DVB, un second module récepteur (R2) de flux de données numériques du type IP reliés à des moyens de traitement et d'affichage (P/A) de données d'information sur les services diffusés, des moyens de commutation (SW) aptes à activer la réception des données numériques d'un service équivalent au service en cours de réception avec le second module récepteur (R2) lorsque les conditions de réception par le premier module récepteur (R1) se dégradent, ladite unité (STB) de traitement est **caractérisée en ce qu'**elle comprend des moyens de déterminer le service équivalent à partir d'une table d'information de services stockée dans une mémoire non-volatile et située au niveau le plus élevé dans la hiérarchie des tables d'information de services, ladite table d'information de services contenant des descripteurs comprenant des identificateurs de services du type DVB et des adresses IP correspondant audit services du type DVB.

9. Unité de traitement (STB) selon la revendication 8, **caractérisée en ce que** le service équivalent est déterminé par la table d'information réseau NIT définie selon la norme ETSI EN 300 468.

10. Unité de traitement (STB) selon la revendication 8, **caractérisée en ce que** le service équivalent est déterminé par la table d'association de bouquets BAT ou de description de service SDT définie selon la norme ETSI EN 300 468.

11. Unité de traitement (STB) selon la revendication 8, **caractérisée en ce que** la réception des données numériques avec le second module récepteur (R2) est activée automatiquement lorsque les conditions de réception avec le premier module récepteur (R1) se dégradent.

12. Unité de traitement (STB) selon la revendication 8, **caractérisée en ce que** la réception des données numériques avec le second module récepteur (R2) est activée manuellement selon les informations affichées lorsque les conditions de réception avec le premier module récepteur (R1) se dégradent.

## Claims

1. Method for transmitting services information in a broadcasting network by at least one managing center (CG1...CGn) towards a plurality of processing units (STB1, STBn) connected on one hand to a digital data streams broadcasting network of DVB type and on the other hand to a digital data streams broadcasting network of IP type, said streams comprising content data of the services and additional information data on said services structured in tables adapted to the transmission protocol specific to each type of network, said method is **characterized in that** it comprises following steps:
- exploring the streams broadcasted by the network of DVB type and the streams broadcasted by the network of IP type and extracting services information from these streams,
- completing an information table, situated at the highest level in the hierarchy of the services information tables by services information including a descriptor comprising an identifier of a service of the network of IP type and an IP address corresponding to said service, said table being comprised in the DVB-SI services information transmitted by the network of DVB type.
- transmitting the completed information table in the streams broadcasted by the network of DVB type towards the processing units, said completed information table contributing to reduce the analysis and processing tasks executed by the processing units during determination of the service of the network of IP type corresponding to a currently received service of the network of DVB type.

2. Method according to claim 1, **characterized in that** the completed information table consists of the network information table NIT defined according to the standards ETSI EN 300 468

3. Method according to claim 1, **characterized in that** the completed information table consists of the bouquet association table BAT or of the services description table SDT defined according to the standards ETSI EN 300 468.

4. Method according to claim 1 **characterized in that** the information table is completed with a reference of the broadcaster of the IP services.

5. Method according to claim 1 **characterized in that** the completed information table is transmitted divided into several sub-tables each attributed to a broadcaster of IP services.

6. Method according to claim 1 **characterized in that** the information table is completed with the services information extracted from the SD&S (Service Discovery & Selection) structure transmitted by the network of IP type.

7. Method according to claim 1 **characterized in that** the services information concerning the network of IP type are introduced into the information table from files or from databases.

8. Processing unit (STB) of digital data services streams comprising a first receiver module (R1) receiving digital data streams of the DVB type and a second receiver module (R2) receiving digital data streams of the IP type linked to means for processing and displaying (P/A) of broadcasted services information data, switching means (SW) able to activate the reception of digital data of a service equivalent to the service currently received with the second receiver module (R2) when the receiving conditions by the first receiver module (R1) are degraded, said processing unit (STB) is **characterized in that** it comprises means for determining the equivalent service from a services information table stored in a non-volatile memory and situated at the highest level in the hierarchy of the services information tables, said services information table containing descriptors comprising identifiers of services of the DVB type and IP addresses corresponding to said services of the DVB type.

9. Processing unit according to claim 8, **characterized in that** the equivalent service is determined by the network information table NIT defined according to the standards ETSI EN 300 468.

10. Processing unit according to claim 8, **characterized in that** the equivalent service is determined by the bouquet association table BAT or by the services description table SDT defined according to the standards ETSI EN 300 468.

11. Processing unit according to claim 8, **characterized in that** the reception of the digital data with the second receiver module (R2) is activated automatically when the conditions of reception with the first receiver module (R1) are degraded.

12. Processing unit according to claim 8, **characterized in that** the reception of the digital data with the second receiver module (R2) is activated manually according to the displayed information when the conditions of reception with the first receiver (R1) module are degraded.

## Patentansprüche

1. Methode zur Übermittlung von Dienstinformationen innerhalb eines Verteilnetzwerks durch mindestens ein Verwaltungszentrum (CG1...CGx) an eine Vielzahl von Verarbeitungseinheiten (STB1, STBx), die einerseits mit einem Verteilernetzwerk für den Fluss von digitalen Daten des Typs DVB und andererseits mit einem Verteilernetzwerk für den Fluss von digitalen Daten des Typs IP verbunden ist, wobei die genannten Flüsse Daten zum Inhalt der Dienste und zusätzliche Informationsdaten über die genannten Dienste enthalten, die in Tabellen angeordnet sind, die an das Übermittlungsprotokoll für jede Art von Netzwerk angepasst sind. Die genannte Methode zeichnet sich **dadurch** aus, dass sie folgende Schritte beinhaltet:
- Untersuchen der durch das Netzwerk des Typs DVB verteilten Flüsse und der durch das Netzwerk des Typs IP verteilten Flüsse und Extrahieren der Dienstinformationen der genannten Flüsse,
- Ausfüllen einer Informationstabelle, die sich auf der höchsten hierarchischen Ebene der Tabellen der Dienstinformationen befindet, mit Dienstinformationen, die einen Beschreiber enthalten, der wiederum eine Kennung eines Dienstes des Netzwerks des Typs IP und eine dem genannten Dienst zugehörige IP-Adresse enthält; diese Tabelle ist in den durch das DVB-Netzwerk übertragenen Dienstinformationen enthalten.
- Übermitteln der ausgefüllten Informationstabelle an die durch das DVB-Netzwerk an die Verarbeitungseinheiten verteilten Flüsse, die genannte ausgefüllte Informationstabelle trägt dazu bei, die von den Verarbeitungseinheiten während der Bestimmung des Dienstes des Netzwerks des Typs IP, das einem Dienst des empfangenden Netzwerks des Typs DVB entspricht, ausgeführten Analyse- und Verarbeitungsaufgaben zu reduzieren.

2. Methode gemäß dem Anspruch 1, **dadurch gekennzeichnet, dass** die ausgefüllte Informationstabelle aus der Informationstabelle des NIT-Netzwerks besteht und entsprechend der Norm ETSI EN 300 468 definiert ist.

3. Methode gemäß Anspruch 1, **dadurch gekennzeichnet, dass** die ausgefüllte Informationstabelle aus der Bouquet Association Table BAT oder der Dienstbeschreibung SDT besteht, die entsprechend der Norm ETSI EN 300 468 definiert ist.

4. Methode gemäß Anspruch 1, **dadurch gekennzeichnet, dass** die Informationstabelle mit einer Referenz des IP-Dienstverteilers ausgefüllt ist.

5. Methode gemäß dem Anspruch 1, **dadurch gekennzeichnet, dass** die ausgefüllte Informationstabelle in Form von einzelnen Untertabellen übertragen wird, die jeweils einem IP-Dienstverteiler zugeordnet sind.

6. Methode gemäß Anspruch 1 , **dadurch gekennzeichnet, dass** die Informationstabelle mit aus der SD&S-Struktur Service Discovery & Selection) extrahierten Dienstinformationen ausgefüllt ist, die vom IP-Netzwerk übermittelt wird.

7. Methode gemäß Anspruch 1, **dadurch gekennzeichnet, dass** die sich auf das IP-Netzwerk beziehenden Dienstinformationen aus Dateien oder Datenbanken in die Informationstabelle eingeführt werden.

8. Verarbeitungseinheit (STB) des digitalen Datenflusses der Dienste, die ein erstes Empfängermodul (R1) für digitale Datenflüsse des Typs DVB, ein zweites Empfängermodul (R2) für digitale Datenflüsse des Typs IP enthält, verbunden mit einem Verarbeitungs- und Anzeigemedium (P/A) für Informationsdaten hinsichtlich der verteilten Dienste, Schaltmedien (SW), die in der Lage sind, den Empfang der digitalen Daten eines Dienstes zu aktivieren, der dem mit dem zweiten Empfangsmodul (R2) empfangenden Dienst entspricht, wenn die Empfangsbedingungen durch das erste Empfangsmodul (R1) sich verschlechtern. Die genannte Verarbeitungseinheit (STB) ist **gekennzeichnet dadurch, dass** sie ausgehend von einer Informationstabelle für Dienste, die in einem nicht flüchtigen Speicher gespeichert ist und sich auf der höchsten Hierarchieebene der Informationstabellen befindet, Mittel zur Bestimmung des entsprechenden Dienstes beinhaltet: Die genannte Informationstabelle für Dienste enthält die Beschreiber, die wiederum die Kennung von Diensten des Typs DVP und die den Diensten des Typs DVB entsprechenden IP-Adressen beinhalten.

9. Verarbeitungseinheit (STB) gemäß dem Anspruch 8, **gekennzeichnet dadurch, dass** der entsprechende Dienst von der Informationstabelle des NIT-Netzwerks bestimmt wird, die entsprechend der Norm ETSI EN 300 468 definiert ist.

10. Verarbeitungseinheit (STB) gemäß Anspruch 8, **dadurch gekennzeichnet, dass** der entsprechende Dienst von der Bouquet Association Table BAT oder der Dienstbeschreibung SDT bestimmt wird, die entsprechend der Norm ETSI EN 300 468 definiert ist.

11. Verarbeitungseinheit '(STB) gemäß Anspruch 8, **dadurch gekennzeichnet, dass** der Empfang der digitalen Daten mit dem zweiten Empfangsmodul (R2) automatisch aktiviert wird, wenn die Empfangsbedingungen mit dem ersten Empfangsmodul (R1) sich verschlechtern.

12. Verarbeitungseinheit '(STB) gemäß Anspruch 8, **dadurch gekennzeichnet, dass** der Empfang der digitalen Daten mit dem zweiten Empfangsmodul (R2) manuell entsprechend den angezeigten Informationen aktiviert wird, wenn die Empfangsbedingungen mit dem ersten Empfangsmodul (R1) sich verschlechtern.
